# EUROPÄISCHE PATENTSCHRIFT

(11) **EP 2 959 377 B1**
(45) Veröffentlichungstag und Bekanntmachung des Hinweises auf die Patenterteilung: **04.09.2019**
(21) Anmeldenummer: 13805313.7
(22) Anmeldetag: 03.12.2013
(51) Int. Cl.: G06F 8/61, G06F 8/65, G06F 13/40

(54) **DATENLADEVORRICHTUNG UND DATENLADEVERFAHREN ZUM LADEN VON SOFTWARE IN FLUGZEUGSYSTEME**
DATA LOADING DEVICE AND DATA LOADING METHOD FOR LOADING SOFTWARE INTO AIRCRAFT SYSTEMS
DISPOSITIF ET PROCÉDÉ DE CHARGEMENT DE DONNÉES POUR CHARGER DU LOGICIEL DANS DES SYSTÈMES AVIONIQUES

(30) Priorität: 20.12.2012 DE 102012223933
(43) Veröffentlichungstag der Anmeldung: 30.12.2015
(73) Patentinhaber: Lufthansa Technik AG, 22335 Hamburg (DE)
(72) Erfinder: WECKESSER, Christian, 65510 Idstein (DE); REICHLE, Marc-Christian, 68542 Heddesheim (DE); SCHOWALTER, Jörg, 67577 Alsheim (DE); FLIEGNER, Matthias, 63329 Egelsbach (DE)
(74) Vertreter: Müller Verweyen
(86) Internationale Anmeldenummer: PCT/EP2013/075355
(87) Internationale Veröffentlichungsnummer: WO 2014/095341

(56) Entgegenhaltungen:
- US-A1- 2009 112 884
- / Iogear An Aten International Company: "Quick Start Guide, 4x2 / 4x4 USB 2.0 Peripheral Sharing Switch, GUS402 / GUS404", , 1. Januar 2012 (2012-01-01), Seiten 1-6, XP055100370, Foothill Ranch, CA 92610, USA Gefunden im Internet: URL:http://www.iogear.com/support/manual/G US402_GUS404_QSG.pdf [gefunden am 2014-02-05]

## Beschreibung

Die Erfindung betrifft eine Datenladevorrichtung zum Laden von Software in Flugzeugsysteme, wobei die Datenladevorrichtung einen tragbaren Computer und einen Datenspeicher umfasst sowie ein korrespondierendes Datenladeverfahren.

In einem modernen Luftfahrzeug sind eine Vielzahl elektronischer Komponenten eingebaut, die zur Erfüllung ihrer jeweiligen Funktion ein Programm oder Betriebssystem ausführen, das in der elektronischen Komponente gespeichert ist. Diese elektronischen Komponenten können beispielsweise Flugkontrollsysteme, Funk- und Radarsysteme sein. Weiterhin sind in Luftfahrzeugen elektronische Komponenten eingebaut, die zur Erfüllung ihrer Aufgabe im Luftfahrzeug neben einem Programm auf eine Vielzahl von Daten zugreifen müssen, wie beispielsweise Navigationssysteme, die regelmäßig mit aktuellen Informationen über Änderungen an Funkfeuern, Flughäfen, usw. aktualisiert werden müssen.

Die Mehrzahl der elektronischen Komponenten erfährt daher im Laufe der Nutzungsdauer mindestens eine Software- und/oder Datenaktualisierung. Komponenten, die auf Software mit Informationen aus Datenbanken zugreifen, werden deutlich häufiger aktualisiert.

Da es für eine Aktualisierung der elektronischen Komponenten unzweckmäßig ist, diese einzeln aus dem Luftfahrzeug zu entfernen und die entsprechenden Änderungen bzw. Aktualisierungen in einer Werkstatt durchzuführen, können diese Komponenten in der Regel im verbauten Zustand mit aktualisierten oder verbesserten Programmen und/oder aktualisierten Datenbankinformationen versorgt werden.

Die elektronischen Komponenten eines Luftfahrzeugs sind in der Regel mit einem Datenbus miteinander verbunden, der für das Einladen der Änderungen genutzt werden kann, so dass der Zugriff von außen auf die elektronischen Komponenten nur an einer oder wenigen Stellen im Luftfahrzeug erfolgen muss.

Die Aktualisierungen oder Änderungen von Software oder Daten für elektronische Komponenten eines Luftfahrzeugs werden dem Betreiber des Luftfahrzeugs oder einer Luftfahrzeugflotte durch den Luftfahrzeughersteller, den Herstellern der einzelnen elektronischen Komponenten oder anderen als Software- bzw. Datenpakete zur Verfügung gestellt. Sie werden als Datenkonfiguration jeweils für ein bestimmtes Flugzeug zusammengestellt. Diese werden auch als Field Loadable Software (FLS) bezeichnet.

Die in ein Luftfahrzeug zu ladenden Datenkonfigurationen sind aufgrund ihrer Relevanz für die Flugsicherheit äußerst sicherheitskritisch, wodurch eine Freigabe der Datenkonfigurationen, Nachweisführung und besondere Sorgfalt bei der Versionspflege nötig sind. Weiterhin muss der Betreiber am Boden die aktuellen Datenkonfigurationen eines im Betrieb befindlichen Luftfahrzeugs aufgrund behördlicher Auflagen jederzeit überprüfen und nachweisen können.

Für die Änderung oder Aktualisierung der Datenkonfiguration des jeweiligen Luftfahrzeugs ist eine Erstellung von Datenträgern notwendig, die sehr aufwendig ist. Zudem ist deren Verwaltung, Verteilung und Nachverfolgung ebenfalls sehr aufwendig, da aufgrund der Sicherheitsrelevanz im Flugbetrieb eine besondere Nachweisführung erforderlich ist.

Die Datenkonfiguration wird nach Erstellung eines Arbeitsauftrags für den Transfer zum Luftfahrzeug vorbereitet. Für den Transfer werden Datenträger genutzt und für diesen Auftrag mit der entsprechenden Datenkonfiguration beladen. Bei aktuellen Flugzeugmustern sind dies in der Regel USB-Medien, welche Disketten oder CDs als Datenträger abgelöst haben. Diese USB-Medien werden als Datenträger für die Daten der Field Loadable Software verwendet und müssen produziert und bis zum Verbringen zum Flugzeug eingelagert werden.

Bei einem Ladevorgang im Flugzeug werden die USB-Medien an eine entsprechende Schnittstelle eines Datenladers des Flugzeugs angeschlossen, welche das USB-Medium ausliest und die entsprechende Datenkonfiguration in die einzelnen Systemkomponenten des Flugzeugs lädt. Somit können die Softwareaktualisierungen als neue Datenkonfiguration des Luftfahrzeugs an die einzelnen elektronischen Komponenten des Luftfahrzeugs übertragen werden.

Bei der Aktualisierung von Software von Flugzeugsystemen muss aus sicherheitstechnischen Gründen sichergestellt werden, dass die Daten auf dem Datenträger bzw. des USB-Mediums nicht von Dritten ausgelesen oder verändert werden. Hierfür muss weiterhin nach Abschluss des Datenladevorgangs sichergestellt werden, dass die Daten auf dem Datenträger wieder gelöscht werden, um einen Datenmissbrauch auszuschließen.

Zur Sicherstellung dieser Anforderungen werden die USB-Medien zunächst manuell produziert, d.h. die entsprechende Field Loadable Software bzw. Datenkonfiguration wird auf einem entsprechenden USB-Datenträger gespeichert und anschließend in einem versiegelten Transportbehältnis verschlossen. Das Transportbehältnis wird in ein Lager verbracht und dort bis zum Verbringen zu dem bestimmten Flugzeug eingelagert. Steht das entsprechende Flugzeug zur Wartung bereit, wird der Datenträger vom Lager dorthin transportiert. Ein entsprechender Techniker prüft das versiegelte Transportbehältnis, entnimmt den USB-Datenträger und verwendet diesen am Flugzeug.

Anschließend wird der benutzte USB-Datenträger erneut in einem versiegelten Transportbehältnis verpackt, welches in der Regel zum Produktionsort transportiert wird, wo der Datenträger ausgelesen wird, sofern das Flugzeug Daten auf dem USB-Datenträger gespeichert hat. Abschließend wird der Datenträger vernichtet oder die Daten auf dem Datenträger gelöscht.

Die Aktualisierung von Datenkonfigurationen mit den entsprechenden Datenträgern und den notwendigen Sicherheitsvorkehrungen ist entsprechend aufwendig und somit kostenintensiv. Daneben ergeben sich aus dem Verfahren lange Produktions- bzw. Vorlaufzeiten, welche die Reaktionszeiten auf kurzfristige Aktualisierungen von Software verlängern. Dies ist insbesondere problematisch, wenn es sich bei den Aktualisierungen um sog. Emergency AD handelt, welche eine Aktualisierung der Software in den Flugzeugsystemen vor dem nächsten Start vorsehen, was entsprechend der Bodenzeiten des Flugzeugs bis zur Aktualisierung zu einer temporären Stilllegung des Flugzeugs führen und hierdurch sehr kostenintensiv sein kann.

Weiterhin kann mit dem aktuellen Verfahren mit versiegelten Transportbehältnissen nur eine Veränderung der Daten ausgeschlossen werden. Das Entwenden eines Transportbehältnisses und ein Auslesen der Daten durch Dritte kann daher hierdurch nicht ausgeschlossen werden.

Eine direkte Übertragung von Daten von einem PC oder Computer über einen Anschluss von PC oder Computer an die Flugzeugsysteme ist starken Restriktionen unterworfen, um eine schadhafte Wechselwirkung des aktiven Computers, welcher die Daten bereitstellt, mit den Flugzeugsystemen in jedem Fall zu verhindern. Daher müssen bei einem Anschluss eines Computers, der ein aktives elektronisches Gerät, z.B. an den USB-Anschluss eines Flugzeugs, welcher für passive USB-Speichermedien eingerichtet ist, sehr aufwendige Sicherheitsnachweise erbracht werden.

US 2009/0112884 A1 offenbart eine Datenladevorrichtung mit einem tragbaren Computer, einer Festplatte, einer Schaltvorrichtung und einem externen Netzwerkanschluss. Die Schaltvorrichtung weist zwei Schaltzustände auf. In einem ersten Schaltzustand verbindet die Schaltvorrichtung den Computer mit dem Netzwerkanschluss und der Festplatte. In einem zweiten Schaltzustand verbindet die Schaltvorrichtung ein NAS Interfacemodul mit der Festplatte und dem Netzwerkanschluss, um den Betrieb der Festplatte als Netzwerkspeicher zu ermöglichen.

IOGEAR An ATEN International Company, "Quick Start Guide 4x2 / 4x4 USB 2.0 Peripheral Sharing Switch GUS 402 / GUS 404", 2012, offenbart eine USB-Schaltvorrichtung, die ein oder mehrere USB-Peripheriegerät(e) wie z.B. Tastatur, Maus, Drucker, USB-kompatibler Monitor oder USB-Festplatte zur Nutzung durch eine Vielzahl von Computern umschalten kann.

Die Aufgabe der Erfindung ist die Bereitstellung einer Vorrichtung und eines korrespondierenden Verfahrens, die ein effizientes und sicheres Laden von Datenkonfigurationen in Luftfahrzeuge mit verringertem Aufwand ermöglichen.

Die Aufgabe der Erfindung wird ausgehend vom Oberbegriff des Anspruchs 1 mit dessen kennzeichnenden Merkmalen gelöst. Es wird eine Datenladevorrichtung zum Laden von Software in Flugzeugsysteme vorgeschlagen, wobei die Datenladevorrichtung einen tragbaren Computer und einen Datenspeicher umfasst. Erfindungsgemäß weist die Datenladevorrichtung eine Schaltvorrichtung auf, wobei die Schaltvorrichtung einen externen Datenanschluss aufweist. Die Schaltvorrichtung kann zwischen Computer, Datenspeicher und Datenanschluss Verbindungen schalten, wobei die Schaltvorrichtung einen ersten Schaltzustand aufweist, der eine Verbindung zwischen Computer und Datenspeicher aufweist, und die Schaltvorrichtung einen zweiten Schaltzustand aufweist, der eine Verbindung zwischen Datenspeicher und Datenanschluss aufweist. Die Schaltvorrichtung weist keinen Schaltzustand auf, der eine Verbindung zwischen dem Computer und dem Datenanschluss aufweist. Bei einer Unterbrechung einer Stromversorgung des Computers,der Datenladevorrichtung und/oder der Schaltvorrichtung ist die Schaltvorrichtung dazu eineingerichtet, automatisch in den ersten Schaltzustand zu wechseln.

Erfindungsgemäß weist die Schaltvorrichtung keinen Schaltzustand auf, der eine direkte Verbindung zwischen Computer und Datenanschluss aufweist. Dies ist vorteilhaft, um einen Anschluss des Computers an das Flugzeug in jedem Fall zu verhindern, damit keine negative Wechselwirkung entstehen kann. Somit kann auch ein aufwendiges luftfahrtrechtliches Zulassungsverfahren für den Computer vermieden werden, da er aufgrund der Schaltvorrichtung nicht mit dem, Flugzeug verbunden werden kann. Dies ermöglicht es, einen handelsüblichen Computer zu verwenden, was zu erheblichen Kostenvorteilen führt.

Bei einer Unterbrechung einer Stromversorgung des Computers und/oder der Schaltvorrichtung ist die Schaltvorrichtung erfindungsgemäß dazu eingerichtet, automatisch in den ersten Schaltzustand zu wechseln. Auf diese Weise wird gewährleistet, dass nach einer Unterbrechung der Stromzufuhr oder nach einem Anschalten der Schaltvorrichtung der Datenspeicher nicht von außen einfach ausgelesen werden kann, was zuträglich für die Datensicherheit ist.

Die Schaltvorrichtung erlaubt die kurzfristige Produktion eines entsprechenden Datenträgers in Form des Datenspeichers in dem ersten Schaltzustand mit den entsprechenden Daten der Datenkonfiguration, welche auf dem Computer gespeichert werden können. Das Kopieren der entsprechenden Daten auf den Datenspeicher kann beispielsweise im Flugzeug erfolgen, so dass das Verpacken, Versiegeln und Entpacken eines Datenträgers entfallen kann. Die Sicherheit der Daten vor dem Zugriff Dritter wird anhand der zeitnahen Erstellung der Daten auf dem Datenspeicher durch die Überwachung des entsprechenden Wartungstechnikers erreicht, so dass zwischen Erstellung der unverschlüsselten Daten auf dem Datenspeicher und der Verwendung im Flugzeug nur ein kurzes und durch den Techniker überwachtes Zeitintervall besteht.

Der Datenspeicher ist daher vorteilhaft physisch mit dem Computer verbunden, so dass diese beiden nicht ohne weiteres voneinander getrennt werden können, was sicherheitstechnische Vorteile bietet.

Der Datenspeicher kann anschließend mittels der Schaltvorrichtung in dem zweiten Schaltzustand über den Datenanschluss an das Luftfahrzeug, insbesondere an den Datenlader des Luftfahrzeugs, angeschlossen werden. Der Datenspeicher erfüllt in diesem Schaltzustand der Schaltvorrichtung die gleiche Funktionalität wie die Datenträger aus dem Stand der Technik. Ein Unterschied liegt in der Schaltvorrichtung, welche in diesem Fall in der Datenverbindung zwischen Datenspeicher und Flugzeug angeordnet ist.

Die Datenladevorrichtung stellt hierdurch die sichere, nicht manipulierbare elektronische Bereitstellung von Daten, vorzugsweise via USB-Schnittstelle, dar.

In einer vorteilhaften Ausführungsform weist die Schaltvorrichtung einen elektronischen gesteuerten Schalter auf. Ein elektronisch gesteuerter Schalter ermöglicht eine kompakte Bauform, wobei der Schalter beispielsweise in einer bevorzugten Ausführungsform über den Computer gesteuert werden kann, so dass die Bedienung vereinfacht wird.

Neben dem ersten und zweiten Schaltzustand kann die Schaltvorrichtung einen dritten Schaltzustand aufweisen, der in einer möglichen vorteilhaften Ausführungsform beispielsweise anstelle des ersten Schaltzustands nach einer Stromunterbrechung eingenommen werden kann, wobei die Schaltvorrichtung jegliche Verbindung zwischen Datenspeicher, Computer und Datenanschluss trennt.

Vorzugsweise weist der Datenspeicher ein Universal Serial Bus (USB) Standard Interface auf. Der Datenspeicher kann somit ein USB-Massenspeicher sein, der nach dem USB-Standard auslesbar ist, bspw. ein USB-Stick. Auf diese Weise kann der Datenspeieher in einfacher Weise durch die üblichen Datenlader eines Flugzeugs ausgelesen werden, wodurch der Datenspeicher in einfacher Weise zum Laden von Field Loadable Software eingesetzt werden kann.

Vorzugsweise ist die Schaltvorrichtung auf einer Schnittstellenkarte angeordnet. Dies ermöglicht eine kleine Bauweise und eine einfache Integration in einen Computer. Die Schnittstellenkarte kann beispielsweise über einen PCI- oder PCIe Bus mit einem Computer kommunizieren. Weiterhin ist die Schnittstellenkarte in bevorzugten Ausführungsformen eine PCMCIA-Karte oder eine ExpressCard, welche vorzugsweise eine interne USB-Schnittstelle eines Computers benutzen können.

Weiterhin sind Computer, Datenspeicher und Schaltvorrichtung vorzugsweise gemeinsam in einem Gehäuse angeordnet. Dies ermöglicht einen mechanischen Zugriffsschutz auf die einzelnen Teile und vereinfacht die Handhabung der Datenladevorrichtung. In einer alternativen vorteilhaften Ausführungsform ist die Schaltvorrichtung mittels einer externen Schnittstelle mit dem Computer verbindbar. Die Schaltvorrichtung kann beispielsweise über einen USB-Anschluss in einfacher Weise an den Computer angeschlossen werden. Der Computer benötigt daher keine besondere Ausrüstung und kann kostengünstig als Datenladevorrichtung genutzt werden.

Weiterhin wird die Aufgabe der Erfindung ausgehend vom Oberbegriff des Anspruchs 7 mit dessen kennzeichnenden Merkmalen gelöst. Es wird ein Datenladeverfahren mit einer Datenladevorrichtung nach dem Oberbegriff von Anspruch 1 vorgeschlagen, welches erfindungsgemäß die folgenden Verfahrenschritte umfasst:
- Bereitstellen der Software in dem Computer,
- Kopieren der Software von dem Computer in den Datenspeicher, wobei die Schaltvorrichtung in dem ersten Schaltzustand ist,
- Umschalten der Schaltvorrichtung in den zweiten Schaltzustand,
- Anschließen des Datenanschlusses an ein Flugzeugsystem.

Durch das Bereitstellen der Software in dem Computer beinhaltet dieser alle Daten, die dem Flugzeug z.B. als USB-Datenträger bereitgestellt werden sollen, auf einem internen Laufwerk des Computers. Die Daten auf dem internen Laufwerk des Computers können beispielsweise über eine Netzwerkverbindung z.B. über die Standards 3G, WiFi und/oder LAN übertragen und aktualisiert werden. Dies kann unabhängig von der Verwendung von USB-Speichermedien sein.

Weiterhin wird ein Datenladeverfahren nach den Ansprüchen 8 bis 14 vorgeschlagen.

In einer bevorzugten Ausführungsform erfolgen die folgenden Verfahrensschritte nach dem Laden der Software in das Flugzeugsystem:
- Trennen des Datenanschlusses von dem Flugzeugsystem,
- Umschalten der Schaltvorrichtung in den ersten Schaltzustand,
- Auslesen des Datenspeichers durch den Computer, um Daten, die ein Datenlader des Flugzeugs zurück auf den Datenspeicher schreibt, auf den Computer zu übertragen,
- Löschen der Software auf dem Datenspeicher.

Hierdurch können Daten, welche der Datenlader des Flugzeugs zurück auf den Datenspeicher schreibt, auf den Computer übertragen werden, welcher die entsprechenden Daten für eine Nachweisführung weiterverarbeitet und/oder weitervermitteln kann. Weiterhin kann der Datenspeicher direkt im Anschluss an seine Verwendung gelöscht werden, so dass der ungewollte Zugriff von Dritten auf diese Daten im Datenspeicher verhindert werden kann. Gleichzeitig wird weiterhin durch die Schaltvorrichtung sichergestellt, dass der Computer zu keiner Zeit eine direkte Datenverbindung mit den Systemen des Flugzeugs eingeht.

Vorzugsweise wird die Software verschlüsselt auf dem Computer bereitgestellt. Durch die Verschlüsselung der Software auf dem Computer können diese Daten ohne die Verwendung von Siegeln vor dem Zugriff und der Manipulation durch Dritte effektiv geschützt werden. Die Daten können durch den Wartungstechniker kurz vor dem Kopiervorgang der entsprechenden Datenkonfiguration in den Datenspeicher entschlüsselt, und anschließend wieder verschlüsselt werden. Dies kann in einer vorteilhaften Ausführung für den Anwender in transparenter Form geschehen. Die entsprechenden Sicherheitsmaßnahmen für die unverschlüsselten Datenträger mit Hilfe versiegelter Transportbehältnisse sind somit obsolet.

Die Erfindung wird im Folgenden anhand bevorzugter Ausführungsformen unter Bezugnahme auf die beigefügten Figuren erläutert. Dabei zeigt:
- Fig. 1: eine Datenladevorrichtung in einem ersten Schaltzustand;
- Fig. 2: eine Datenladevorrichtung in einem zweiten Schaltzustand mit angeschlossenen Flugzeugsystemen;
- Fig. 3: eine Datenladevorrichtung mit einer externen Schnittstelle zum Computer; und
- Fig. 4: eine Datenladevorrichtung mit einer internen Schnittstelle zum Computer.

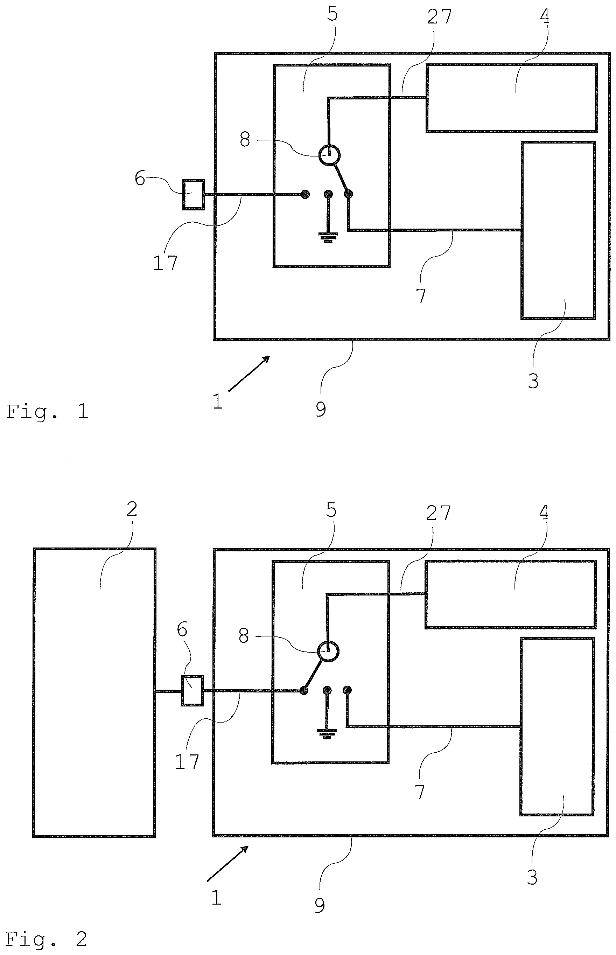

In Fig. 1 ist ein Ausführungsbeispiel einer Datenladevorrichtung 1 schematisch dargestellt, welche einen tragbaren Computer 3 und einen Datenspeicher 4 aufweist. Weiterhin weist die Datenladevorrichtung 1 einen Datenanschluss 6 auf, welcher dafür vorgesehen ist, an ein Flugzeug, insbesondere an einen in dem Flugzeug integrierten Datenlader, angeschlossen zu werden. Zwischen Computer 3, Datenspeicher 4 und Datenanschluss 6 ist eine Schaltvorrichtung 5 in der Datenladevorrichtung 1 vorgesehen, welche jeweils eine Verbindung 7, 17, 27 zu dem Computer 3, zu dem Datenanschluss 6 und zu dem Datenspeicher 4 aufweist. Der Datenspeicher 4 ist hierbei nicht Teil des Computers 3, kann aber in diesen integriert bzw. in den Computer 3 eingebaut sein.

Die Verbindungen 7, 17, 27 sind hierbei vorteilhafterweise Datenverbindungen, welche eine Datenübertragung nach einem USB-Standard ermöglichen. In alternativen Ausführungsbeispielen kann auch ein anderer Datenübertragungsstandard verwendet werden.

Die Schaltvorrichtung 5 schaltet vorzugsweise die Verbindungen 7, 17, 27 zwischen zwei Schaltzuständen. In einem ersten Schaltzustand, welcher in der Fig. 1 dargestellt ist, wird durch die Schaltvorrichtung 5 eine Verbindung 7, 27 zwischen dem Datenspeicher 4 und dem Computer 3 hergestellt. In diesem Schaltzustand kann der Datenspeicher 4 vom Computer 3 beispielsweise als externer USB-Massenspeicher erkannt und dementsprechend verwendet werden.

In einer typischen Verwendung der Datenladevorrichtung 1 verwendet z.B. ein Wartungstechniker die Datenladevorrichtung 1 im Flugzeug zum Laden einer neuen Datenkonfiguration. Die entsprechenden Daten sind verschlüsselt in dem Computer 3 gespeichert. Der Wartungstechniker entschlüsselt die Daten beispielsweise durch ein entsprechendes Passwort und startet mit dem Computer 3 einen Kopiervorgang der Daten bzw. der Software auf den Datenspeicher 4. Hierbei ist es unerheblich, ob das Flugzeug bzw. der Datenlader des Flugzeugs bereits mit dem Datenanschluss 6 der Datenladevorrichtung 1 verbunden ist, da dieser Anschluss im ersten Schaltzustand keine Verbindung 17 zu dem Datenspeicher 4 oder dem Computer 3 aufweist. Es liegt im ersten Schaltzustand eine exklusive Verbindung 7, 27 zwischen Datenspeicher 4 und Computer 3 vor, welcher den Datenanschluss 6 ausschließt.

Nach dem Kopieren liegen die Daten unverschlüsselt als Field Loadable Software auf dem Datenspeicher bereit und können verwendet werden.

In Fig. 2 ist im nächsten Arbeitsschritt gezeigt, wie die Datenladevorrichtung 1 mit dem Datenanschluss 6 an ein Flugzeugsystem 2, wie z.B. ein USB-Anschluss des Flugzeugs, ein Datenlader des Flugzeugs oder ein vergleichbares elektronisches System des Flugzeugs angeschlossen ist. Die Verbindung 17 zwischen Schaltvorrichtung 5 und dem Flugzeugsystem 2 erfolgt in bevorzugten Ausführungsbeispielen mittels USB-Standard.

Die Schaltvorrichtung 5 ist in der Fig. 2 in einem zweiten Schaltzustand gezeigt, welcher eine Verbindung 17, 27 zwischen Datenspeicher 4 und Flugzeugsystem 2 aufweist. Diese Verbindung 17, 27 ist exklusiv, so dass auch im zweiten Schaltzustand keine Verbindung 7, 17 zwischen Flugzeugsystem 2 und Computer 3 besteht. In der Schaltvorrichtung 5 können weitere Schaltzustände vorgesehen sein, welche beispielsweise jede Verbindung 7, 17, 27 zwischen allen angeschlossenen Komponenten trennen. Dieser mögliche Schaltzustand ist in den Fig. 1 und Fig. 2 mit dem mittleren Anschluss für den symbolisierten Schalter 8 der Schaltvorrichtung 5 schematisch dargestellt. Die Schaltvorrichtung weist in bevorzugten Ausführungsbeispielen einen elektronisch gesteuerten Schalter 8 auf, welcher beispielsweise über den Computer 3 oder über ein entsprechendes Bedienfeld gesteuert werden kann. Der Schaltvorgang des elektronischen gesteuerten Schalters 8 kann z.B. von dem Wartungstechniker ausgelöst werden, nachdem das Kopieren der Software auf den Datenspeicher 4 abgeschlossen ist.

In diesem Ausführungsbeispiel ist der Datenspeicher 4 an ein Flugzeugsystem 2 durch das Einnehmen des zweiten Schaltzustands angeschlossen worden. Das Flugzeugsystem 2 erkennt in einem vorteilhaften Ausführungsbeispiel den Anschluss des Datenspeichers 4 automatisch. Alternativ kann eine dementsprechende manuelle Steuereingabe am Flugzeugsystem 2 erfolgen.

Das Flugzeugsystem 2 liest die entsprechende Datenkonfiguration bzw. Field Loadable Software aus dem Datenspeicher 4 aus und verarbeitet und/oder überträgt diese in weitere Systeme oder Komponenten des Flugzeugs, so dass das Flugzeug mit einem neuen Softwarestand bzw. einer neuen Datenkonfiguration ausgerüstet ist.

Nach dem Abschluss des Updatevorgangs wird der Datenanschluss 6 und das Flugzeugsystem 2 manuell wieder getrennt. Die Daten liegen zu diesem Zeitpunkt noch unverschlüsselt auf dem USB-Stick vor. Daher wären die Daten beim Entwenden der Datenladevorrichtung 1 nicht vor einem unerwünschten Zugriff von Dritten geschützt. Weiterhin bestünde die Gefahr bei einer weiteren Verwendung der Datenladevorrichtung, dass bei einem Anschluss an ein Flugzeugsystem eines anderen Flugzeugs dort Daten eingelesen werden, welche nicht für dieses Flugzeug vorgesehen sind. In einem vorteilhaften Ausführungsbeispiel schaltet die Datenladevorrichtung 1 bei Unterbrechung der Verbindung 7 wieder in den ersten Schaltzustand und löscht die auf dem Datenspeicher 4 befindlichen Daten. Somit wird der Missbrauch der Daten oder eine versehentliche Verwendung der selbigen an einem anderen Flugzeugsystem 2 unterbunden.

In einem vorteilhaften Ausführungsbeispiel wird der Schaltzustand der Schaltvorrichtung 5 wieder in den ersten Schaltzustand versetzt, so dass der Computer 3 die Daten auf dem Datenspeicher 4 auslesen kann. Dies kann beispielsweise sinnvoll oder auch notwendig sein, wenn die Flugzeugsysteme 2 eine Rückmeldung über den Datenladevorgang auf den Datenspeicher 4 geschrieben haben. Das Auslesen ist hierbei nicht zwangsläufig für das Datenladeverfahren notwendig und kann beispielsweise auch weggelassen werden. Weiterhin kann ein Auslesen durch den Computer 3 zumindest in Teilen erfolgen, sobald der erste Schaltzustand eingenommen wird, und der Computer 3 automatisch den Anschluss des Datenspeichers 4 erkennt.

Nach dem Auslesen werden die Daten auf dem Datenspeicher 4 wieder gelöscht, so dass diese nicht mehr von Nichtberechtigten ausgelesen oder fälschlich in ein anderes Flugzeug geladen werden können.

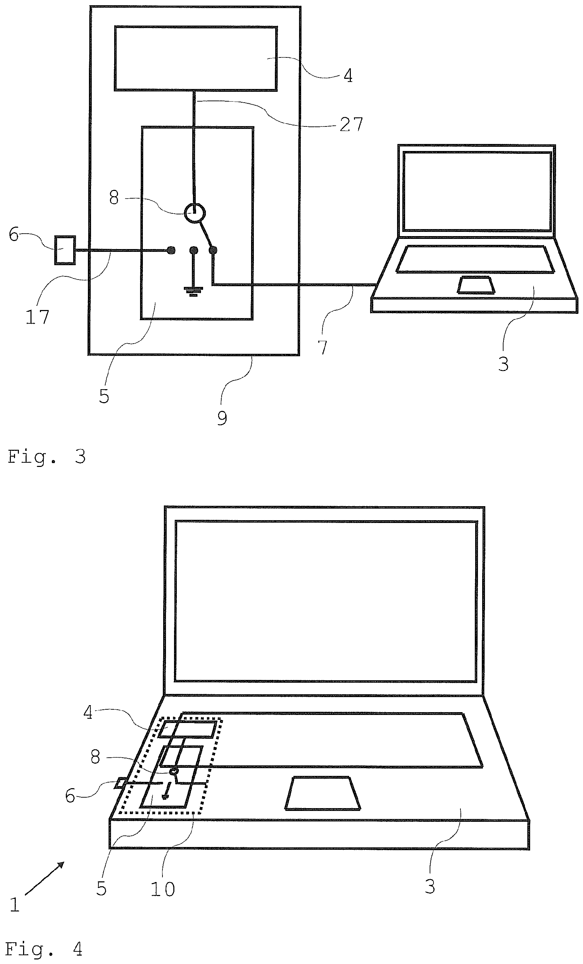

In Fig. 3 ist ein mögliches Ausführungsbeispiel gezeigt, bei dem die Datenladevorrichtung 1 eine externe Schnittstelle zu dem Computer 3 aufweist. Die Schaltvorrichtung 5 ist über eine Verbindung 7 extern am Computer 3, z.B. an einem USB-Anschluss, angeschlossen. Weiterhin ist der Datenspeicher 4 ebenfalls extern über eine Verbindung 27 an die Schaltvorrichtung 5 angeschlossen. Die Datenladevorrichtung 1 kann daher mit einer Mehrzahl von Computern 3 genutzt werden, da der Anschluss der Schaltvorrichtung 5 in einfacher Weise an einen anderen Computer angeschlossen werden kann.

In einem möglichen alternativen Ausführungsbeispiel sind die Schaltvorrichtung 5 und der Datenspeicher 4 in einem gemeinsamen Gehäuse 9 ohne den Computer 3 angeordnet. Dies verringert die Teileanzahl gegenüber einem extern angeschlossenen Datenspeicher 4 und verbessert die Handhabung und Sicherheit der Datenladevorrichtung 1.

In Fig. 4 ist ein weiteres vorteilhaftes Ausführungsbeispiel einer Datenladevorrichtung 1 dargestellt, wobei die Schaltvorrichtung 5 und der Datenspeicher 4 auf einer vorzugsweise austauschbaren Schnittstellenkarte 10 integriert sind, welche intern in dem Computer 3 angeschlossen ist. Der Datenanschluss 6 zum Anschluss der Datenladevorrichtung 1 an ein Flugzeugsystem 2 steht an einem Ausgang der Schnittstellenkarte 10 zur Verfügung. Dieses Ausführungsbeispiel erlaubt eine einfache Handhabung der Datenladevorrichtung 1. Der Datenspeicher 4 kann in einem alternativen Ausführungsbeispiel auch extern an die Schnittstellenkarte 10 angeschlossen sein.

## Patentansprüche

1. Datenladevorrichtung (1) zum Laden von Software in Flugzeugsysteme (2), wobei die Datenladevorrichtung (1) einen tragbaren Computer (3) und einen Datenspeicher (4) umfasst, wobei
- die Datenladevorrichtung (1) eine Schaltvorrichtung (5) aufweist, wobei
- die Schaltvorrichtung (5) einen externen Datenanschluss (6) aufweist,
- die Schaltvorrichtung (5) zwischen dem Computer (3), dem Datenspeicher (4) und dem Datenanschluss (6) Verbindungen (7,17,27) schalten kann, wobei
- die Schaltvorrichtung (5) einen ersten Schaltzustand aufweist, wobei in dem ersten Schaltzustand durch die Schaltvorrichtung (5) eine Verbindung (7, 27) zwischen dem Datenspeicher (4) und dem Computer (3) hergestellt wird,
- die Schaltvorrichtung (5) einen zweiten Schaltzustand aufweist, der eine Verbindung (17, 27) zwischen dem Datenspeicher (4) und dem Datenanschluss (6) aufweist, und
- wobei die Datenladevorrichtung (1) zum Anschließen des Datenanschlusses (6) an ein Flugzeugsystem (2) und zum Laden der Software in das Flugzeugsystem (2) vorgesehen und eingerichtet ist,
wobei die Schaltvorrichtung (5) keinen Schaltzustand aufweist, der eine Verbindung (7,17) zwischen dem Computer (3) und dem Datenanschluss (6) aufweist, **dadurch gekennzeichnet, dass**
- bei einer Unterbrechung einer Stromversorgung des Computers (3) der Datenladevorrichtung (1) und/oder der Schaltvorrichtung (5) die Schaltvorrichtung (5) dazu eingerichtet ist, automatisch in den ersten Schaltzustand zu wechseln.

2. Datenladevorrichtung (1) nach Anspruch 1, **dadurch gekennzeichnet, dass** die Schaltvorrichtung (5) einen elektronischen gesteuerten Schalter (8) aufweist.

3. Datenladevorrichtung (1) nach einem der vorangehenden Ansprüche, **dadurch gekennzeichnet, dass** der Datenspeicher (4) ein Universal Serial Bus (USB) Standard Interface aufweist.

4. Datenladevorrichtung (1) nach einem der vorangehenden Ansprüche, **dadurch gekennzeichnet, dass** die Schaltvorrichtung (5) auf einer Schnittstellenkarte (10) angeordnet ist, welche intern in dem Computer (3) angeschlossen ist.

5. Datenladevorrichtung (1) nach einem der vorangehenden Ansprüche, **dadurch gekennzeichnet, dass** der Computer (3), der Datenspeicher (4) und die Schaltvorrichtung (5) gemeinsam in einem Gehäuse (9) angeordnet sind.

6. Datenladevorrichtung (1) nach einem der Ansprüche 1 bis 4, **dadurch gekennzeichnet, dass** die Schaltvorrichtung (5) mittels einer externen Schnittstelle mit dem Computer (3) verbindbar ist.

7. Datenladeverfahren mit einer Datenladevorrichtung (1) zum Laden von Software in Flugzeugsysteme (2), wobei die Datenladevorrichtung (1) einen tragbaren Computer (3) und einen Datenspeicher (4) umfasst, wobei
- die Datenladevorrichtung (1) eine Schaltvorrichtung (5) aufweist, wobei
- die Schaltvorrichtung (5) einen externen Datenanschluss (6) aufweist,
- die Schaltvorrichtung (5) zwischen dem Computer (3), dem Datenspeicher (4) und dem Datenanschluss (6) Verbindungen (7,17,27) schalten kann, wobei
- die Schaltvorrichtung (5) einen ersten Schaltzustand aufweist, wobei in dem ersten Schaltzustand durch die Schaltvorrichtung (5) eine Verbindung (7, 27) zwischen dem Datenspeicher (4) und dem Computer (3) hergestellt wird,
- die Schaltvorrichtung (5) einen zweiten Schaltzustand aufweist, der eine Verbindung (17, 27) zwischen dem Datenspeicher (4) und dem Datenanschluss (6) aufweist, und
- wobei die Datenladevorrichtung (1) zum Anschließen des Datenanschlusses (6) an ein Flugzeugsystem (2) und zum Laden der Software in das Flugzeugsystem (2) vorgesehen und eingerichtet ist,
- wobei die Schaltvorrichtung (5) keinen Schaltzustand aufweist, der eine Verbindung (7,17) zwischen dem Computer (3) und dem Datenanschluss (6) aufweist, umfassend die folgenden Verfahrenschritte:
- Bereitstellen der Software in dem Computer (3),
- Kopieren der Software von dem Computer (3) in den Datenspeicher (4), wobei die Schaltvorrichtung (5) in dem ersten Schaltzustand ist,
- Umschalten der Schaltvorrichtung (5) in den zweiten Schaltzustand,
- Anschließen des Datenanschlusses (6) an ein Flugzeugsystem (2),
- Laden der Software in das Flugzeugsystem (2),
**dadurch gekennzeichnet, dass** bei einer Unterbrechung einer Stromversorgung des Computers (3) der Datenladevorrichtung (1) und/oder der Schaltvorrichtung (5) die Schaltvorrichtung (5) automatisch in den ersten Schaltzustand wechselt.

8. Datenladeverfahren nach Anspruch 7, **gekennzeichnet durch** die folgenden Verfahrensschritte, welche nach dem Laden der Software in das Flugzeugsystem (2) erfolgen:
- Trennen des Datenanschlusses (6) von dem Flugzeugsystem (2),
- Umschalten der Schaltvorrichtung (5) in den ersten Schaltzustand,
- Auslesen des Datenspeichers (4) durch den Computer (3), um Daten, die ein Datenlader des Flugzeugs zurück auf den Datenspeicher (4) schreibt, auf den Computer (3) zu übertragen,
- Löschen der Software auf dem Datenspeicher (4).

9. Datenladeverfahren nach Anspruch 7 oder 8, **dadurch gekennzeichnet, dass** die Software verschlüsselt auf dem Computer (3) der Datenladevorrichtung (1) bereitgestellt und vor dem Kopieren in den Datenspeicher (4) entschlüsselt wird.

10. Datenladeverfahren nach einem der Ansprüche 7 bis 9,
**dadurch gekennzeichnet, dass** die Schaltvorrichtung (5) einen elektronischen gesteuerten Schalter (8) aufweist.

11. Datenladeverfahren nach einem der Ansprüche 7 bis 10,
**dadurch gekennzeichnet, dass** der Datenspeicher (4) ein Universal Serial Bus (USB) Standard Interface aufweist.

12. Datenladeverfahren nach einem der Ansprüche 7 bis 11,
**dadurch gekennzeichnet, dass** die Schaltvorrichtung (5) auf einer Schnittstellenkarte (10) angeordnet ist, welche intern in dem Computer (3) angeschlossen ist.

13. Datenladeverfahren nach einem der Ansprüche 7 bis 12,
**dadurch gekennzeichnet, dass** der Computer (3), der Datenspeicher (4) und die Schaltvorrichtung (5) gemeinsam in einem Gehäuse (9) angeordnet sind.

14. Datenladeverfahren nach einem der Ansprüche 7 bis 13,
**dadurch gekennzeichnet, dass** die Schaltvorrichtung (5) mittels einer externen Schnittstelle mit dem Computer (3) verbindbar ist.

## Claims

1. Data loading device (1) for loading software into aircraft systems (2), the data loading device (1) comprising a portable computer (3) and a data storage device (4), wherein
- the data loading device (1) comprises a switching device (5), wherein
- the switching device (5) comprises an external data connection (6),
- the switching device (5) is adapted to switch connections (7, 17, 27) between the computer (3), the data storage device (4) and the data connection (6), wherein
- the switching device (5) has a first switching state, wherein, in the first switching state, a connection (7, 27) is established between the data storage device (4) and the computer (3) by means of the switching device (5),
- the switching device (5) has a second switching state which comprises a connection (17, 27) between the data storage device (4) and the data connection (6), and
- wherein the data loading device (1) is provided and configured to connect the data connection (6) to an aircraft system (2) and to load the software into the aircraft system (2),
wherein the switching device (5) does not have a switching state which comprises a connection (7, 17) between the computer (3) and the data connection (6),
**characterised in that**
- if a power supply to the computer (3) of the data loading device (1) and/or to the switching device (5) is interrupted, the switching device (5) is configured to automatically switch into the first switching state.

2. Data loading device (1) according to claim 1, **characterised in that** the switching device (5) comprises an electronically controlled switch (8).

3. Data loading device (1) according to any of the preceding claims, **characterised in that** the data storage device (4) comprises a Universal Serial Bus (USB) standard interface.

4. Data loading device (1) according to any of the preceding claims, **characterised in that** the switching device (5) is arranged on an interface card (10) which is internally connected to the computer (3).

5. Data loading device (1) according to any of the preceding claims, **characterised in that** the computer (3), the data storage device (4) and the switching device (5) are arranged together in one housing (9).

6. Data loading device (1) according to any of claims 1 to 4, **characterised in that** the switching device (5) can be connected to the computer (3) by means of an external interface.

7. Data loading method comprising a data loading device (1) for loading software into aircraft systems (2), the data loading device (1) comprising a portable computer (3) and a data storage device (4), wherein
- the data loading device (1) comprises a switching device (5), wherein
- the switching device (5) comprises an external data connection (6),
- the switching device (5) is adapted to switch connections (7, 17, 27) between the computer (3), the data storage device (4) and the data connection (6), wherein
- the switching device (5) has a first switching state, wherein, in the first switching state, a connection (7, 27) is established between the data storage device (4) and the computer (3) by means of the switching device (5),
- the switching device (5) has a second switching state which comprises a connection (17, 27) between the data storage device (4) and the data connection (6), and
- wherein the data loading device (1) is provided and configured to connect the data connection (6) to an aircraft system (2) and to load the software into the aircraft system (2),
- wherein the switching device (5) does not have a switching state which comprises a connection (7, 17) between the computer (3) and the data connection (6), comprising the following method steps:
- providing the software on the computer (3),
- copying the software from the computer (3) into the data storage device (4), the switching device (5) being in the first switching state,
- switching the switching device (5) into the second switching state,
- connecting the data connection (6) to an aircraft system (2),
- loading the software into the aircraft system (2),
**characterised in that** if a power supply to the computer (3) of the data loading device (1) and/or to the switching device (5) is interrupted, the switching device (5) automatically switches into the first switching state.

8. Data loading method according to claim 7, **characterised by** the following method steps, which are carried out after loading the software into the aircraft system (2):
- disconnecting the data connection (6) from the aircraft system (2),
- switching the switching device (5) into the first switching state,
- reading out the data storage device (4) using the computer (3) in order to transfer data which a data loader of the aircraft writes back onto the data storage device (4) to the computer (3),
- erasing the software from the data storage device (4).

9. Data loading method according to claim 7 or 8, **characterised in that** the software is provided on the computer (3) of the data loading device (1) in an encrypted manner and is decrypted before the process of copying into the data storage device (4).

10. Data loading method according to any of claims 7 to 9, **characterised in that** the switching device (5) comprises an electronically controlled switch (8).

11. Data loading method according to any of claims 7 to 10, **characterised in that** the data storage device (4) comprises a Universal Serial Bus (USB) standard interface.

12. Data loading method according to any of claims 7 to 11, **characterised in that** the switching device (5) is arranged on an interface card (10) which is internally connected to the computer (3).

13. Data loading method according to any of claims 7 to 12, **characterised in that** the computer (3), the data storage device (4) and the switching device (5) are arranged together in one housing (9).

14. Data loading method according to any of claims 7 to 13, **characterised in that** the switching device (5) can be connected to the computer (3) by means of an external interface.

## Revendications

1. Dispositif de chargement de données (1) destiné à charger du logiciel dans des systèmes avioniques (2), dans lequel le dispositif de chargement de données (1) comprend un ordinateur portable (3) et une mémoire de données (4), dans lequel
- le dispositif de chargement de données (1) comporte un dispositif de commutation (5), dans lequel
- le dispositif de commutation (5) comporte une liaison de données externe (6),
- le dispositif de commutation (5) peut commuter les connexions (7, 17, 27) entre l'ordinateur (3), la mémoire de données (4) et la liaison de données (6), dans lequel
- le dispositif de commutation (5) comporte un premier état de commutation, dans lequel une connexion (7, 27) est établie par le dispositif de commutation (5) entre la mémoire de données (4) et l'ordinateur (3) dans le premier état de commutation,
- le dispositif de commutation (5) comporte un deuxième état de commutation, lequel comporte une connexion (17, 27) entre la mémoire de données (4) et la liaison de données (6), et
- dans lequel le dispositif de chargement de données (1) est prévu et disposé pour relier la liaison de données (6) à un système avionique (2) et pour charger le logiciel dans le système avionique (2),
- dans lequel le dispositif de commutation (5) ne comporte aucun état de commutation comportant une connexion (7, 17) entre l'ordinateur (3) et la liaison de données (6), **caractérisé en ce que**
- lors d'une interruption d'une alimentation électrique de l'ordinateur (3) du dispositif de chargement de données (1) et/ou du dispositif de commutation (5), le dispositif de commutation (5) est disposé de façon à basculer automatiquement dans le premier état de commutation.

2. Dispositif de chargement de données (1) d'après la revendication 1, **caractérisé en ce que** le dispositif de commutation (5) comporte un commutateur (8) commandé électroniquement.

3. Dispositif de chargement de données (1) d'après l'une des revendications précédentes, **caractérisé en ce que** la mémoire de données (4) comporte une interface USB (Universal Serial Bus).

4. Dispositif de chargement de données (1) d'après l'une des revendications précédentes, **caractérisé en ce que** le dispositif de commutation (5) est agencé sur une carte d'interface (10), laquelle est raccordée dans l'ordinateur (3) de manière interne.

5. Dispositif de chargement de données (1) d'après l'une des revendications précédentes, **caractérisé en ce que** l'ordinateur (3), la mémoire de données (4) et le dispositif de commutation (5) sont agencés ensemble dans un boîtier (9).

6. Dispositif de chargement de données (1) d'après l'une des revendications 1 à 4, **caractérisé en ce que** le dispositif de commutation (5) peut être connecté à l'ordinateur (3) au moyen d'une interface externe.

7. Procédé de chargement de données avec un dispositif de chargement de données (1) destiné à charger du logiciel dans des systèmes avioniques (2), dans lequel le dispositif de chargement de données (1) comprend un ordinateur portable (3) et une mémoire de données (4), dans lequel
- le dispositif de chargement de données (1) comporte un dispositif de commutation (5), dans lequel
- le dispositif de commutation (5) comporte une liaison de données externe (6),
- le dispositif de commutation (5) peut commuter les connexions (7, 17, 27) entre l'ordinateur (3), la mémoire de données (4) et la liaison de données (6), dans lequel
- le dispositif de commutation (5) comporte un premier état de commutation, dans lequel une connexion (7, 27) est établie par le dispositif de commutation (5) entre la mémoire de données (4) et l'ordinateur (3) dans le premier état de commutation,
- le dispositif de commutation (5) comporte un deuxième état de commutation, lequel comporte une connexion (17, 27) entre la mémoire de données (4) et la liaison de données (6), et
- dans lequel le dispositif de chargement de données (1) est prévu et disposé pour relier la liaison de données (6) à un système avionique (2) et pour charger le logiciel dans le système avionique (2),
- dans lequel le dispositif de commutation (5) ne comporte aucun état de commutation comportant une connexion (7, 17) entre l'ordinateur (3) et la liaison de données (6), comprenant les étapes de procédé suivantes :
- préparation du logiciel dans l'ordinateur (3),
- copie du logiciel de l'ordinateur (3) vers la mémoire de données (4), dans lequel le dispositif de commutation (5) se trouve dans le premier état de commutation,
- commutation du dispositif de commutation (5) vers le deuxième état de commutation,
- raccordement de la liaison de données (6) à un système avionique (2),
- chargement du logiciel dans le système avionique (2),
**caractérisé en ce que** lors d'une interruption d'une alimentation électrique de l'ordinateur (3) du dispositif de chargement de données (1) et/ou du dispositif de commutation (5), le dispositif de commutation (5) bascule automatiquement dans le premier état de commutation.

8. Procédé de chargement de données d'après la revendication 7, **caractérisé par** les étapes de procédé suivantes, lesquelles se déroulent après le chargement du logiciel dans le système avionique (2) :
- séparation de la liaison de données (6) et du système avionique (2),
- commutation du dispositif de commutation (5) vers le premier état de commutation,
- lecture de la mémoire de données (4) par l'ordinateur (3), afin de transférer des données qu'un chargeur de données de l'avion écrit dans la mémoire de données (4) sur l'ordinateur (3),
- effacement du logiciel sur la mémoire de données (4).

9. Procédé de chargement de données d'après la revendication 7 ou 8, **caractérisé en ce que** le logiciel est préparé chiffré sur l'ordinateur (3) du dispositif de chargement de données (1) et est déchiffré avant copie dans la mémoire de données (4).

10. Procédé de chargement de données d'après l'une des revendications 7 à 9, **caractérisé en ce que** le dispositif de commutation (5) comporte un commutateur (8) commandé électroniquement.

11. Procédé de chargement de données d'après l'une des revendications 7 à 10, **caractérisé en ce que** la mémoire de données (4) comporte une interface USB (Universal Serial Bus).

12. Procédé de chargement de données d'après l'une des revendications 7 à 11, **caractérisé en ce que** le dispositif de commutation (5) est agencé sur une carte d'interface (10), laquelle est raccordée dans l'ordinateur (3) de manière interne.

13. Procédé de chargement de données d'après l'une des revendications 7 à 12, **caractérisé en ce que** l'ordinateur (3), la mémoire de données (4) et le dispositif de commutation (5) sont agencés ensemble dans un boîtier (9).

14. Procédé de chargement de données d'après l'une des revendications 7 à 13, **caractérisé en ce que** le dispositif de commutation (5) peut être connecté à l'ordinateur (3) au moyen d'une interface externe.
